(19) **Europäisches Patentamt / European Patent Office / Office européen des brevets**

(11) **EP 0 913 994 B1**

(12) **EUROPEAN PATENT SPECIFICATION**

(45) Date of publication and mention
of the grant of the patent:
**15.12.2010  Bulletin 2010/50**

(51) Int Cl.:
***H04N 5/44*** *(2006.01)*

(21) Application number: **98119436.8**

(22) Date of filing: **15.10.1998**

(54) **Method and apparatus for automatic format detection in digital video pictures**

Verfahren und Vorrichtung zur automatischen Detektion des Formats in digitalen Videobildern

Méthode et appareil de détection automatique du format dans des images vidéo numériques

(84) Designated Contracting States:
**DE FR GB IT**

(30) Priority: **28.10.1997  EP 97118679**

(43) Date of publication of application:
**06.05.1999  Bulletin 1999/18**

(73) Proprietor: **Thomson Licensing
92130 Issy-les-Moulineaux (FR)**

(72) Inventor: **Weitbruch, Sebastien
78087 Mönchweiler (DE)**

(74) Representative: **Schäferjohann, Volker
Deutsche Thomson OHG
European Patent Operations
Karl-Wiechert-Allee 74
30625 Hannover (DE)**

(56) References cited:
**EP-A- 0 675 645     EP-A- 0 716 542
EP-A- 0 785 676     EP-A- 0 837 602
US-A- 5 699 123**

- **NAKAGAKI N ET AL: "WIDE ASPECT TV RECEIVER WITH ASPECT DETECTION AND NON-LINEAR CONTROL FOR PICTURE QUALITY" IEEE TRANSACTIONS ON CONSUMER ELECTRONICS, vol. 40, no. 3, 1 August 1994, pages 743-751, XP000471244**

**Description**

Prior Art

Today, TV pictures sent by broadcasters could have different formats for the active picture (4:3, 14:9, 16:9, 2:1... with or without sub-titles). When these aspect formats are transmitted in 4:3 video format, the pictures with aspect formats (14:9, 16:9, 2:1... with or without sub-titles) are displayed on 4:3 TV screens with black bars. A very important function of today's 16:9 TV's, i.e. TV's with 16:9 picture tube, is the possibility to zoom the received picture in order to fill the screen and remove or reduce the black bars.

In PAL+-TV standard there is provided a wide screen signalling information embedded in the video signal. In most other TV standards no wide screen signalling is provided. Therefore, in most of the TV's today, the zoom function is made manually by the user, but the user would be interested in an automatic or semiautomatic letterbox detection process which is capable to detect the real active part of the screen in order to enable the TV to make the best zoom operation automatically. Advantageously this function has to respect the broadcasting of sub-titles with the possibility, in that case, to zoom the upper part of the screen only.

From document EP-A-0 716 542 a high precision aspect ratio auto-discrimination apparatus is known wherein it is described to detect the upper edge and lower edge of a letter box picture by detecting the average luminance of every horizontal scan period and comparing it to the average luminance mean value of a defined region in the picture. The format aspect ratio of the picture is selected in dependence of the results of the upper and lower edge detection step. While this algorithm is very simple, there exists the disadvantage that false selection operations may result in case of dark scenes with some luminous parts in the middle of the picture (tunnel scenes, ...). In addition, the fact to use a mean value for defined upper, lower and centre regions could cover up the existence of sub-titles.

N. Nakagaki et al., "Wide aspect TV receiver detection and non-linear control for picture quality", IEEE Transactions on Consumer Electronics, Vol.40, No.3, pp. 743-751, discloses a 4:3/16:9 aspect ratio detection using on one hand black portion discrimination in which the amplitude slice level in the four corners of the picture is obtained, and on the other hand a detection of the border between the black portion and the picture content area. Further, subtitles are detected by finding a certain amount of white signals within the black portion.

EP-A-0785676 discloses a 4:3/16:9 aspect ratio detection using calculation of average brightness of different picture areas and the corresponding average value difference.

EP-A-0675645 discloses an aspect ratio detection using calculation of brightness histograms for different picture areas and for subtitle detection, and using edge detection.

Invention

The object of the invention is to provide a robust algorithm for the automatic detection of the real active video format of the received video signal. The algorithm should provide the information which aspect format is present in the received video signal so that the zoom operation can be made accordingly. This object is achieved according to the invention by means of the measures specified in claim 1.

In principle the method according to the invention consists of four steps: a black bars analysis step, a centre analysis step, a horizontal transition analysis step and a format choice step. This algorithm provides a very strong security in taking a new decision concerning the aspect format selection and avoids unexpected format changes. The algorithm is very simple and could be integrated in a chip at very low costs. The algorithm has a very good behaviour even in very noisy pictures (up to 21dB signal-to-noise ratio). The algorithm can react very quickly. In case of difficult pictures (dark pictures or too noisy picture - under 20dB) the algorithm takes no new decision and waits for a good opportunity to make the right choice. The typical scenes which may damage the behaviour of most known algorithms - dark scene with a luminous centre part like a tunnel scene - do not disturb the behaviour of this algorithm since the condition of recognition of horizontal transitions is not satisfied.

Advantageous developments of and improvements to the method specified in claim 1 are possible by virtue of the measures evinced in the dependent claims. With the measures according to claim 3 it is possible to detect very quickly the presence of sub-titles in the video picture (less than one second) in order to avoid consumer disturbance. The pre-processing step according to claim 2 reduces the impact of noise in the video picture without disturbing the important information's for the letter box detection. The binarisation step according to claim 4 within the horizontal transition analysation step has the advantage that the impact of different luminance levels on the horizontal transition analysation step is avoided.

The gradient computation step according to claim 4 has the advantage to allow the classification of the pixels whether they are on the correct horizontal border line, on no border line or on a wrong horizontal border line. Particular details for the gradient computation step are given in claims 5 to 10. A simple method for evaluating the results of the gradient computation step to find the horizontal transitions is defined in claim 11. Which aspect format is selected when the horizontal transitions are found and the presence of black bars and an active picture part in the centre has been detected depends on the number of active video lines counted between the horizontal transitions. The particular format choices are claimed in claim 12. The provision of a counter for each possible aspect format according to claim 12 has the advantage that wrong switching operations to a new aspect format are avoided when some scenes may feign a new aspect format. When a new aspect format has been selected, a simplified algorithm is performed wherein the ongoing presence of black bars is checked for the selected format.

Drawings

Exemplary embodiments of the invention are illustrated in the drawings and are explained in more detail in the following description. In the figures:

| | |
|---|---|
| Figure 1 | shows 4 possible video pictures with different aspect formats in the active video part; |
| Figure 2 | shows a letter box video picture for the explanation of important parts in the picture; |
| Figure 3 | shows an illustration of the zoom operation for different picture formats; |
| Figure 4 | shows a diagram which illustrates the functioning of the algorithm in form of blocks; |
| Figure 5 | shows an example of a letter box video picture for the explanation of the black bars analysation step; |
| Figure 6 | shows an example of a letter box video picture for the explanation of the centre analysation step; |
| Figure 7 | shows a letter box video picture before and after a binarisation step; |
| Figure 8 | shows the areas in a letter box video picture where a gradient computation step is performed; |
| Figure 9a) | shows a first diagram for the explanation of the gradient computation step; |
| Figure 9b) | shows a second diagram for the explanation of the gradient computation step; |
| Figure 10a) | shows a first example illustrating the gradient computation step; |
| Figure 10b) | shows a second example illustrating the gradient computation step; |
| Figure 11 | shows the results of summing up all gradient values in each video line of a field; |
| Figure 12 | shows the functioning of a decision block in form of blocks; |
| Figure 13 | shows typical video pictures which are difficult to analyse in view of the format detection. |

Description of The Invention

A typical letter box format has black bars in the bottom and upper part of the picture and strong horizontal transitions between these black bars and the rest of the picture. Moreover, a letter box picture with sub-titles is characterised by very high luminance levels in the bottom black bar.

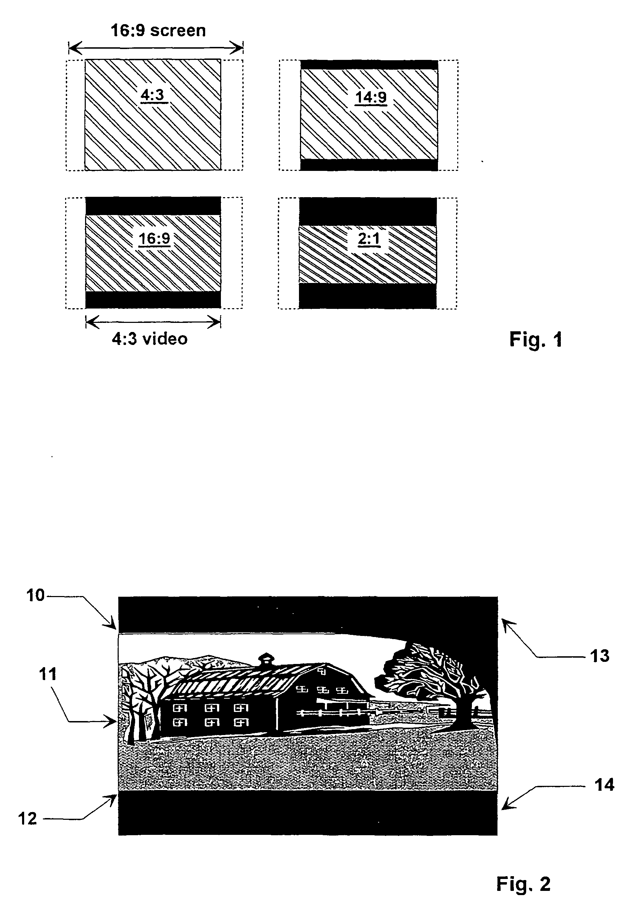

Fig. 1 shows 4 possible video formats for 4:3 video pictures. They are named 4:3 format, 14:9 format, 16:9 format and 2:1 format, respectively corresponding to the aspect ratio of the active video picture. It is useful to classify all possible video formats into these four basic formats. This simplifies the algorithm and makes the algorithm more robust. For the well known PAL system the following definitions are made:

The picture has the 4:3 format when the number of active lines is between 576 and 527; the picture has the 14:9 format when the number of active lines is between 526 and 463; the picture has the 16:9 format when the number of active lines is between 462 and 405 and the picture has the 2:1 format when the number of active lines is under 405. In addition, all the formats 14:9, 16:9, and 2:1 may have sub-titles in the bottom black bar and in these cases the automatic zoom operation in TV receivers with 16:9 tube should be performed in such a manner that only the upper black bar is cut off.

In Fig. 2 reference number 10 denotes a horizontal transition which is present in a part of the picture only. Reference number 11 denotes an active picture part in the centre. Reference number 12 denotes a horizontal transition on the whole picture width. Reference number 13 represents the top black bar and reference number 14 denotes the bottom black bar.

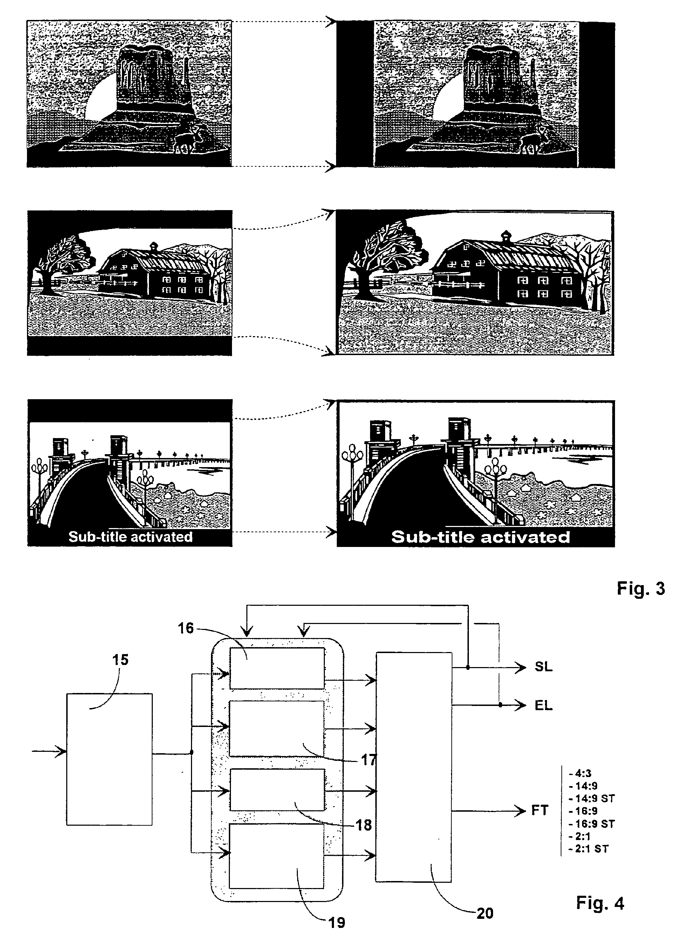

Fig. 3 shows an illustration of the zoom operation for different formats. The first picture shown has 4:3 format. Here, no zoom operation is being carried out in order to avoid a distinct distortion of the picture. The second picture shown has 16:9 format. The zoom operation will be performed in this case without producing a distortion in the displayed picture. No black bars will appear in this case in the video picture displayed on a 16:9 type display. The third picture shown has 16:9 format with active sub-titles in the bottom black bar. Here, the zoom operation is restricted to the upper part of the picture in order not to suppress the sub-titles. It is noted, that the zoom operation itself is not part of this invention, because solutions for powerful zoom operations are already existing and known by the skilled man.

In general words the algorithm according to the invention has to be able to detect a new special format when a new video sequence is started or the TV receiver is switched to a new channel, etc.. This information is supplied to the digital video processing state performing the zoom function. In this situation a very strong decision is needed to avoid unexpected format changing. Second, the algorithm must be capable to analyse in a simple manner whether a new selected format is stable or not. In addition, there is a need for an analysation of the existence of sub-titles in the pictures. This detection will be active the whole time and enable the algorithm to go in a sub-title format when suddenly, a sub-title is detected. Here, it is useful to stay in this format even if no sub-title more is detected.

Fig. 4 shows the functioning of the algorithm in form of a block diagram. Reference number 15 denotes a pre-processing block. Reference number 16 stays for a black bars analysation block. Reference number 17 indicates a centre analysation block. Reference number 18 denotes a sub-title analysation and reference number 19 denotes a horizontal transition analysation block. With reference number 20 a decision block is indicated which receives the results of all previous analysation blocks. Decision block 20 delivers the detected format type via output line FT. It also provides the information for start and end line of the active picture part via respective lines SL and EL. The format types 14:9 ST, 16:9 ST and 2:1 ST correspond to the formats with active sub-titles.

The functioning of all blocks will be described hereafter. The algorithm takes as input the luminance information of the picture.

Pre-processing block:

The idea of this block is to reduce a lot the impact of the noise without disturbing the important information's for the letter box detection.

To do that a strong horizontal low-pass filter (no reducing of the transitions between black bars and the rest of the pictures) is used. The mask of the low-pass filter may be the following filter mask:

$$\frac{1}{5} \cdot \begin{bmatrix} 1 & 1 & 1 & 1 & 1 \end{bmatrix}$$

This filter mask indicates that two neighbouring pixels to the right and to the left of one current pixel plus the current pixel are summed up and the result is divided by 5. The resulting value is the new value of the current pixel.

Black bars analysation block:

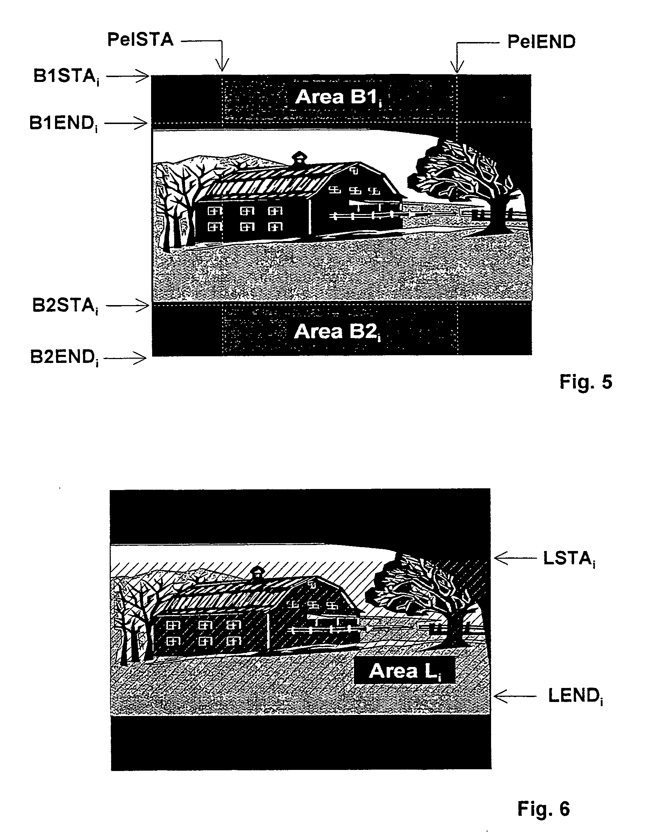

For each possible format having black bars (14: 9, 16:9 and 2:1) two areas are defined in which each pixel value is compared to a BLACKLEVEL reference value and then a black level counter is incremented for each area and each format when the pixel luminance value is below the BLACKLEVEL reference value. These areas are shown in Fig. 5 with hatched structure and indicated by reference symbols Area $B1_i$ and Area $B2_i$. The subscript value "i" shown in Fig. 5 is related to the three possible formats: 14:9(1) - 16:9(2) - 2:1(3) and so this block will output the two values B1Counti and B2Counti for each format. The end line B1ENDi and the start line B2STAi are initialised for a strong black bars analysation step to the values corresponding to the biggest possible active area of each format. Afterwards, when a new format has been found, these values are corrected with the information of start and end line of the active picture part provided by the decision block 20 via the reverse directed lines. The pixel positions PelSTA and PelEND for the horizontal start and end of the black bars analysation step are used to avoid disturbances from logos of program providers.

Centre analysation block:

For each possible format an area $L_i$ (see Fig. 6) located in the middle of the picture is defined in which the value of each pixel is compared to a LIGHTLEVEL reference value and a corresponding light level counter is incremented when a pixel value exceeds the LIGHTLEVEL reference value. A light level counter is provided for each possible format. The output of this block will be a value LCOUNTi which represents the amount of pixels having a value bigger than the LIGHTLEVEL reference value for each format. Here, also the start line LSTAi and end line LENDi are initialised for a strong centre analysation step to the values corresponding to the smallest possible active area of each format. Afterwards, when a new format has been found, these values are corrected with the information of start and end line of the active picture part provided by the decision block 20 via the reverse directed lines.

Sub-title analysation block:

For the sub-title analysation step, it is provided another counter which compares each pixel value in the area $B2_i$ defined in the black bars analysation block to a VLIGHTLEVEL reference value (Very Light Level). This will be done since sub-titles are mostly represented by very light luminance levels which can be detected this way. Also a very light level counter is provided which is incremented when a pixel value exceeds the VLIGHTLEVEL reference value. The sub-title analysation block provides as an output the resulting values VLCOUNTi for each format.

Horizontal transition analysation block:

This block aims to detect the presence of pure horizontally frontiers between the black bars and the active part of the screen.

In order to detect this frontier and to avoid the impact of the different luminance levels, a binarisation of the picture to be analysed is performed. This is done by comparing each pixel with the black level reference value of the black bars analysation step and assigning either the number "0" when the pixel value is below or equal to the black level reference or the number "1" when the pixel value is above the black level reference value.

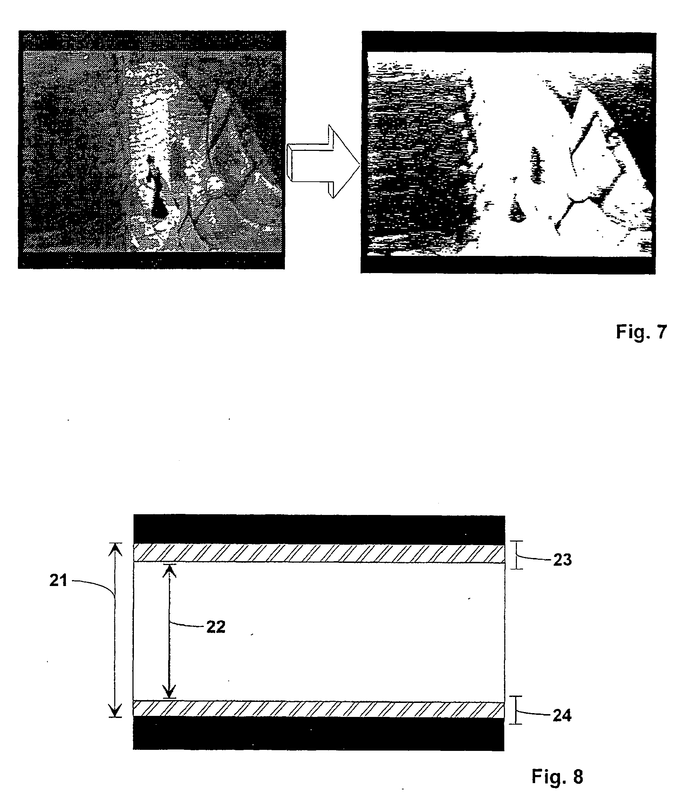

Fig. 7 shows a picture before and after a binarisation step. After the binarisation step only black and white pixels corresponding to the numbers "0" and "1" are present.

Next, a gradient computation step is performed on this binarised picture. Therein, it is computed per pixel of each line a value which indicates if this pixel is on a correct horizontal frontier on no horizontal frontier or on a horizontal frontier not corresponding to the correct horizontal frontier.

In order to make this computation, it is defined per format an area of gradient analysation. This is shown in Fig. 8. Therein, reference number 21 corresponds to the biggest active picture area in format "i". Reference number 22 corresponds to the smallest active picture area in format "i". The gradient analysation areas are denoted by reference numbers 23 and 24. They correspond to the difference areas between the biggest and smallest active picture areas for this format.

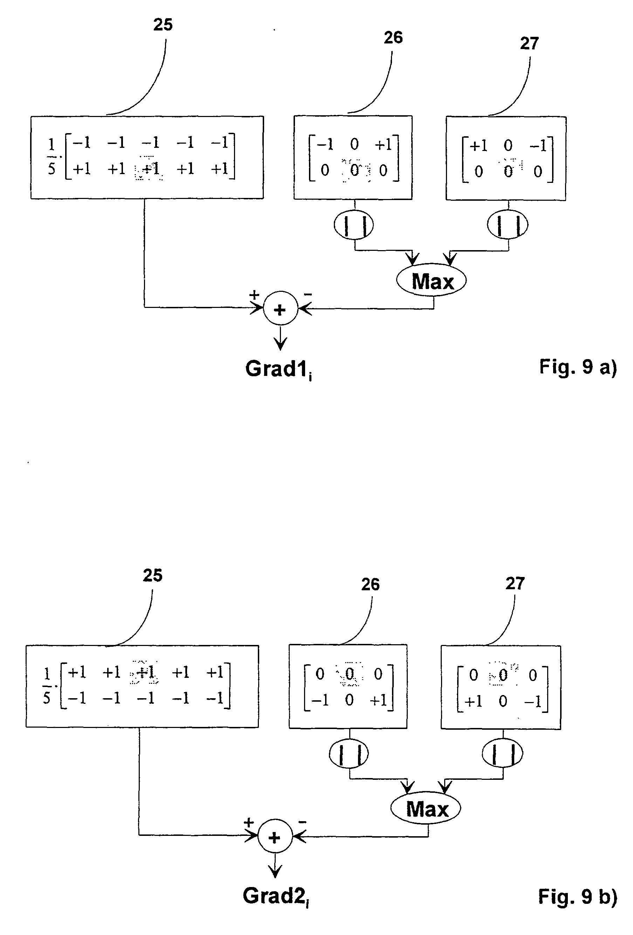

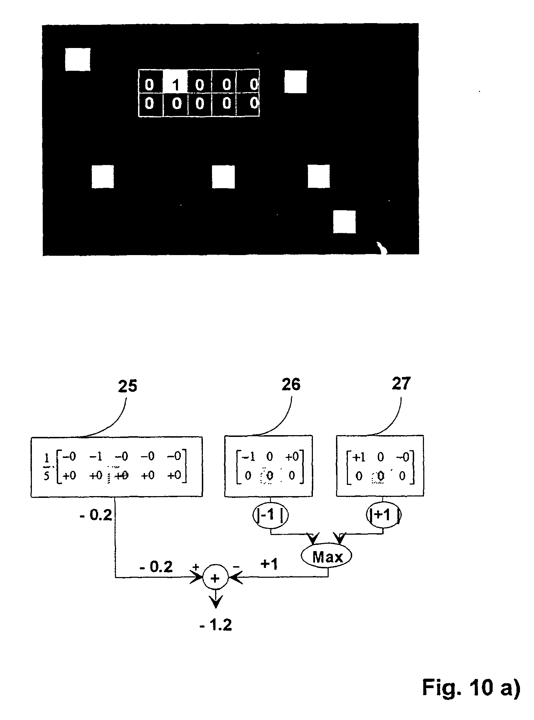

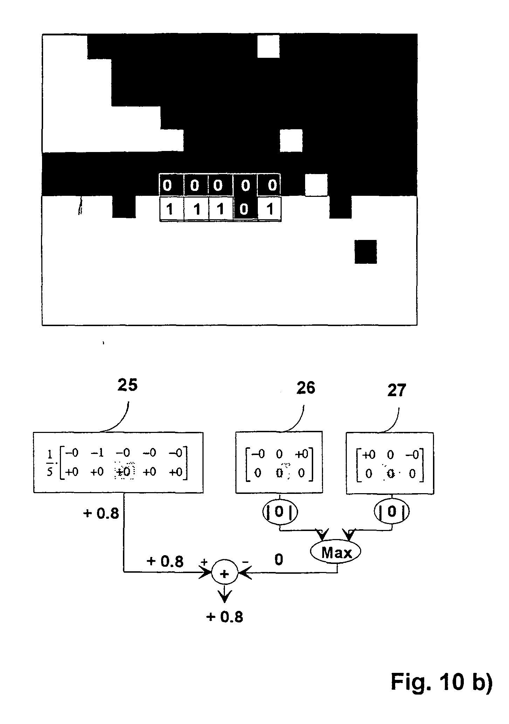

One possible example for the calculation of the gradient values is shown in Fig. 9. Fig. 9a) shows the gradient computation step for the gradient analysation area 23 shown in Fig. 8 and Fig. 9b) shows the gradient computation step for the gradient analysation area 24 of Fig. 8. In block 25 of Fig. 9 is a $2 \times 5$ matrix shown which indicates, that two neighbouring pixels to the left and to the right of a current pixel and five pixels above these pixels are multiplied by the corresponding number "+1" or "-1". The results of all these multiplication operations are summed up and multiplied by the factor 1/5 thus leading to a result which is fed to the adder shown in Fig. 9. The position of the current pixel with respect to the $2 \times 5$ matrix is indicated by a grey square in Fig. 9. In block 26 and 27 a $2 \times 3$ matrix is shown. The corresponding six pixel values including the current pixel are multiplied by the corresponding numbers shown in block 26 and 27. Once more, the results of the multiplication steps are summed up and the absolute values of this results are calculated in the next computation stage below the blocks 26 and 27. Both absolute values are compared and the maximum value is selected in the following computation stage. The resulting value is subtracted from the resulting value of block 25 in the adder. The final result corresponds to the wanted gradient value. When the current pixel value is on a pure correct horizontal transition, the gradient value is "+1", when it is on a pure incorrect horizontal transition, the gradient value is "-1". The blocks 26 and 27 allow for a refined gradient value compared to where only the calculation according to block 25 is performed. Examples for this gradient calculation steps for concrete picture contents are shown in Fig. 10a) and 10b). In both parts of Fig. 10 the gradient calculation is performed based on the method according to Fig. 9a).

The resulting gradient values are summed up per line which corresponds to count the number of good gradient (Grad1i and Grad2i positive) reduced by the number of other structures (Grad1i and Grad2i negative or zero). Then the biggest positive value gives an indication for the line number where a strong horizontal transition is likely to be. A minimum threshold value can be applied to detect strong horizontal transitions only. Fig.

11 illustrates this computation for a whole field of a picture. However, this computation is only necessary for the areas 23 and 24 shown in Fig. 8. The strong horizontal transitions are detected $\approx$ in lines 22 and 265. These lines correspond to the start SL and end line EL of the active picture part. Both line numbers appear at the output of block 19 in Fig. 4.

Decision Block:

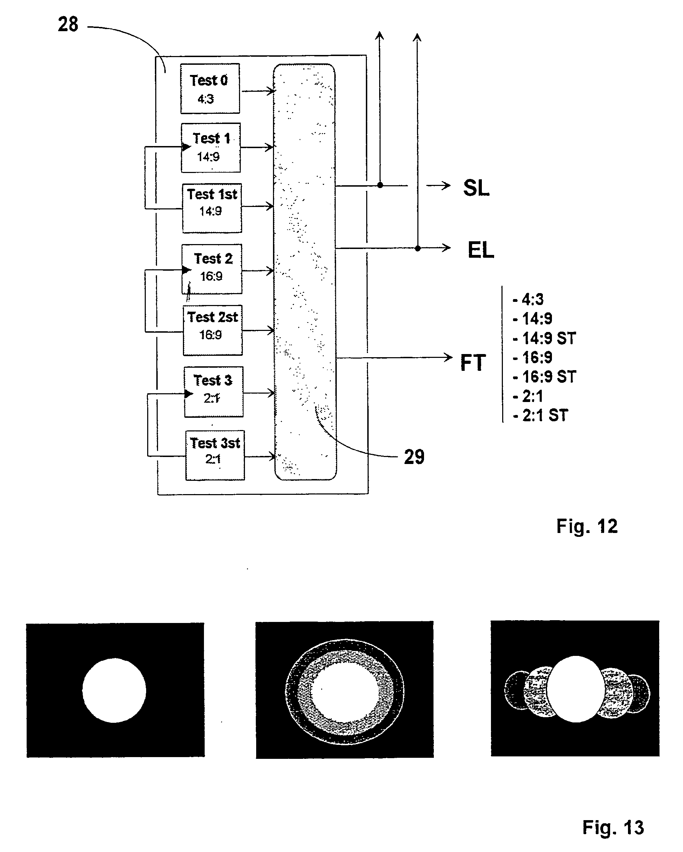

The decision block is illustrated in Fig. 12. This block aims to take a decision (which kind of format is detected) with all the outputs coming from the previous blocks. Therefore, seven tests are implemented. Test 0 checks whether 4:3 format is present in the picture. This test will be described at last.

Test 1 corresponds to the test whether 14:9 format is present in the picture with no sub-titles.
Test 1st corresponds to the test whether 14:9 format is present in the picture with active sub-titles.
Test 2 corresponds to the test whether 16:9 format is present in the picture with no sub-titles.
Test 2st corresponds to the test whether 16:9 format is present in the picture with active sub-titles.
Test 3 corresponds to the test whether 2:1 format is present in the picture with no sub-titles.
Test 3st corresponds to the test whether 2:1 format is present in the picture with active sub-titles.

The tests 1, 2, 3 are positive when the following conditions are fulfilled:

When format i has not been recognised before:

- B1Counti and B2Counti should overtake defined values
- LCounti should overtake a defined value
- VLCounti should remain smaller than a defined threshold
- The pixels located on the two pure horizontal frontiers (GradCount1i and GradCount2i) should be sufficient.

When format i has been recognised before:

- The values B1Counti and B2Counti should remain bigger than the defined values

The tests 1st, 2st, 3st are positive when the following conditions are fulfilled:

When format "ist" has not been recognised :

- B1Counti should overtake a defined value
- LCounti should overtake a defined value
- VLCounti should overtake a defined threshold
- The pixels located on the two pure horizontal frontiers (GradCount1i and GradCount2i) should be sufficient.

When format i has been recognised before:

- The values B1Counti should remain bigger than the defined value.

In addition, when an active sub-title has been detected, the tests concerning the same format without active sub-title are inhibited.

When none of the tests 1 to 3st was positive, test 0 generates a positive result.

Format choice block:

The format choice block is indicated with reference number 29 in Fig. 12. To make a choice, 7 counters are available in block 29. They correspond to the different tests Test0Count(4:3), Test1Count, Test1stCount, Test2Count, ... Each test will give as a result TRUE or FALSE. However, there will be only one TRUE result from all the tests for one picture. This TRUE value will increment the counter related to its test. Similarly, each counter increment resets all the other counters. Thus in fact a new format choice will be taken when one counter reaches an appropriate reference value. This value can be defined for different format switching behaviours (quickness and sensitivity of the algorithm).

As a remark, it is to say, that in case of active sub-titles in the picture, the algorithm is able to provide the real end line of the active part of the picture which enables the zoom operation stage to suppress the sub-title if the user has indicated that he does not want them.

It is without saying that the described blocks can be implemented by appropriate hardwired circuits or by corresponding computer programs. A lot of modifications of the described embodiments are possible and are regarded as being within the scope of the claims. E.g. are a lot of modifications for the gradient computation step possible. The number of neighbouring pixel could be varied. The matrices for the calculation of the gradient values could be modified. Optional rounding steps could be applied to reduce calculation power, etc..

When the algorithm works on pictures which are too dark for a good format choice, it waits for more luminous pictures to take its decision.

When a great amount of noise is present in the pictures, the algorithm has a good behaviour up to a signal-to-noise ratio of 21 dB. Under 20 dB, the algorithm has chosen security and the more noise is added less correct format will be detected. However, it takes no false decision but stays in 4:3 format in order to let the consumer the possibility to adapt the zoom operation by himself.

Also a test has been made with typical pictures which produce problems by other algorithms like the pictures shown in Fig. 13. On such pictures, the real format is not detectable, and a letter box detector needs to wait before taking a decision. Thanks to the horizontal transition analysation, the here described algorithm could not make a false decision and waits for a better sequence to take the right decision!

This algorithm can be used also in VCR's. There, the film can be saved e.g. in a 16:9 format according to the format choice step of the algorithm. This reduces the loss of picture quality. Indeed, if a cinemascope film is stored in 4:3 format, the user has to make a zoom operation which will increase the impression of bad quality. But if the film is already stored in a cinemascope format, no further zoom is needed and the impression of quality will be better.

## Claims

1. Method for automatic detection of the aspect ratio of the active part of digital video pictures transmitted in 4:3 format, wherein the active part can have candidate aspect ratios 4:3, 14:9, 16:9 and 2:1, said method comprising the steps of:

   - analysing for each one of said candidate aspect ratios except said aspect ratio 4:3 whether or not a black bar (13, 14) is present within a pre-defined top area ($B1_i$) and/or a pre-defined bottom area ($B2_i$) of the video pictures, wherein said pre-defined top and bottom areas are pre-defined for each one of said aspect ratios 14:9, 16:9 and 2:1 and said pre-defined top and bottom areas do not extend horizontally to the left and right borders of the video pictures so as to avoid disturbances from logos of program providers, and wherein the analysis is carried out by comparing each luminance pixel value within the pre-defined candidate top areas ($B1_i$) and/or a bottom areas ($B2_i$) with a black level reference value (BLACFCLEVEL) and counting ($B1Count_i$, $B2Count_i$) the corresponding results for each one of said 14:9, 16:9 and 2:1 candidate aspect ratios;
   - analysing for each candidate aspect ratio whether or not within a centre area ($L_i$) located in the middle of the video picture a minimum number ($LCOUNT_i$) of pixels is present that have a minimum brightness level (LIGHTLEVEL);
   - analysing for each one of said 14:9, 16:9 and 2:1 candidate aspect ratios whether or not a horizontal border (10, 12) is present between said black bars and the active part of the video picture, wherein this analysis is carried out on a binarised ('0', '1') version of the video pictures and for that binarisation each pixel value is compared to said black level reference value;
   - selecting (20, 29, FT) one of said candidate aspect ratios, using the results from said analysing steps.

**2.** Method according to claim 1, wherein upstream said analysing steps a horizontal low-pass filtering operation (15) is performed for the pixel values of said video pictures.

**3.** Method according to claim 1 or 2, further including determining for each candidate aspect ratio the number (VLCOUNTi) of pixel values within said predefined bottom area (B2$_i$) that exceed a reference value (VLIGHTLEVEL), in order to detect the presence of sub-titles in the video pictures.

**4.** Method according to one of claims 1 to 3, wherein in said horizontal border analysing step a gradient computation is performed which assigns to each current pixel within an upper gradient analysation area (23) and a lower gradient analysation area (24) of the video pictures a number, e.g. '+1', '0', '-1', which number indicates whether that pixel is located on a correct horizontal border line (10, 12), on no horizontal border line or on a special structure not corresponding to a correct horizontal border line, and wherein the locations of said upper and lower gradient analysation areas are pre-defined for each one of said aspect ratios and represent the areas between the black bars and the active part of said digital video pictures.

**5.** Method according to claim 4, wherein in a top gradient analysis area (23) for said gradient computation the values of a group of neighbouring pixels is used, said group including in the current video line said current pixel and pixels to the right and to the left of said current pixel and the neighbour video line pixels located above these pixels.

**6.** Method according to claim 5, wherein said group has a width of two pixels to the left and to the right of said current pixel, and wherein said gradient computation includes multiplication of the pixel values of said group with corresponding numbers of the matrix

$$\left(\frac{1}{5}\right) \times \begin{bmatrix} -1 & -1 & -1 & -1 & -1 \\ +1 & +1 & +1 & +1 & +1 \end{bmatrix}$$

and summing up all multiplication result values.

**7.** Method according to claim 6, wherein for said gradient computation in addition the corresponding group of pixels, having a width of one pixel to the left and to the right of said current pixel, is multiplied with corresponding numbers of the matrices

$$\begin{bmatrix} -1 & 0 & +1 \\ 0 & 0 & 0 \end{bmatrix} \qquad \begin{bmatrix} +1 & 0 & -1 \\ 0 & 0 & 0 \end{bmatrix},$$

and for each matrix all multiplication result values are summed up and the absolute values are determined for these two sum values and the maximum absolute sum value (Max) is selected, and wherein said selected maximum absolute sum value is subtracted from the sum value output according to claim 6, and wherein the result value is assigned as gradient value to the current pixel in said binarised version of the current video picture, that result value being optionally rounded.

**8.** Method according to claim 4, wherein in a bottom gradient analysis area (24) for said gradient computation the values of a group of neighbouring pixels is used, said group including in the current video line said current pixel and pixels to the right and to the left of said current pixel and the neighbour video line pixels located below these pixels.

**9.** Method according to claim 8, wherein said group has a width of two pixels to the left and to the right of said current pixel, and wherein said gradient computation includes multiplication of the pixel values of said group with corresponding numbers of the matrix

$$\left(\frac{1}{5}\right) \times \begin{bmatrix} +1 & +1 & +1 & +1 & +1 \\ -1 & -1 & -1 & -1 & -1 \end{bmatrix}$$

and summing up all multiplication result values.

**10.** Method according to claim 9, wherein for said gradient computation in addition the corresponding group of pixels, having a width of one pixel to the left and to the right of said current pixel, is multiplied with corresponding numbers of the matrices

$$\begin{bmatrix} 0 & 0 & 0 \\ -1 & 0 & +1 \end{bmatrix} \qquad \begin{bmatrix} 0 & 0 & 0 \\ +1 & 0 & -1 \end{bmatrix},$$

and for each matrix all multiplication result values are summed up and the absolute values are determined for these two sum values and the maximum absolute sum value (Max) is selected, and wherein said selected maximum absolute sum value is subtracted from the sum value output according to claim 9, and wherein the result value is assigned as gradient value to the current pixel in said binarised version of the current video picture, that result value being optionally rounded.

**11.** Method according to claims 4 to 10, wherein the numbers assigned to each pixel value during the gradient calculation step are added per video line and the horizontal transitions are assigned to those lines having the highest sum values.

**12.** Method according to claim 11, wherein

- aspect ratio 4:3 is determined if the number of active video lines is between 576 and 527,
- aspect ratio 14:9 is determined if the number of active video lines is between 526 and 463,
- aspect ratio 16:9 is determined if the number of active video lines is between 462 and 405,
- aspect ratio 2:1 is determined if the number of active video lines is smaller than 405,

and the presence of black bars as well as an active picture area in the centre of the video pictures have been detected.

**13.** Method according to one of claims 1 to 12, wherein for each candidate aspect ratio a counter is provided that is incremented each time the corresponding candidate aspect ratio is selected during the aspect ratio selection step and that is reset when a non-corresponding aspect ratio is selected, and wherein a new aspect ratio selection is declared to be valid if the counter for the new aspect ratio has reached a pre-determined reference value.

**14.** Method according to claim 13 when depending on one of claims 3 to 12, wherein a validation is performed in order to detect whether or not the new aspect ratio selection is stable, that validation including the sub-title analysis step when no sub-title has been detected before.

**15.** Apparatus for automatic detection of the aspect ratio of the active part of digital video pictures transmitted in 4:3 format, wherein the active part can have candidate aspect ratios 4:3, 14:9, 16:9 and 2:1, said apparatus being **characterised by**:

- a unit (16) being adapted for analysing for each one of said candidate aspect ratios except said aspect ratio 4:3 whether or not a black bar (13, 14) is present within a pre-defined top area ($B1_i$) and/or a pre-defined bottom area ($B2_i$) of the video pictures, wherein said pre-defined top and bottom areas are pre-defined for each one of said aspect ratios 14:9, 16:9 and 2:1 and said pre-defined top and bottom areas do not extend horizontally to the left and right borders of the video pictures so as to avoid disturbances from logos of program providers, and wherein the analysis is carried out by comparing each luminance pixel value within the pre-defined candidate top areas ($B1_i$) and/or a bottom areas ($B2_i$) with a black level reference value (BLACKLEVEL) and counting ($B1Count_i$, $B2Count_i$) the corresponding results for each one of said 14:9, 16:9 and 2:1 candidate aspect ratios;

- a unit (17) being adapted for analysing for each candidate aspect ratio whether or not within a centre area ($L_i$) located in the middle of the video picture a minimum number ($LCOUNT_i$) of pixels is present that have a minimum brightness level (LIGHTLEVEL);

- a unit (19) being adapted for analysing for each one of said 14:9, 16:9 and 2:1 candidate aspect ratios whether or not a horizontal border (10, 12) is present between said black bars and the active part of the video picture, wherein this analysis is carried out on a binarised ('0', '1') version of the video pictures and for that binarisation each pixel value is compared to said black level reference value;

- a unit (20, 29) being adapted for selecting (FT) one of said candidate aspect ratios, using the results from said analysing unit.

**16.** Method according to one of claims 1 to 14, wherein the selected (20, 29, FT) candidate aspect ratio is used in a video recording device for the detection of the format of the recorded pictures in order to control the recording operation appropriately.

**17.** Method according to one of claims 1 to 14, wherein the selected (20, 29, FT) candidate aspect ratio is used in a television receiver for the detection of the format of the received video pictures in order to control a zoom operation for adaptation of the picture to the display format accordingly.

**Patentansprüche**

**1.** Verfahren zur automatischen Feststellung des Bildseitenverhältnisses des aktiven Teils von digitalen Videobildern, die im 4:3-Format übertragen werden, wobei der aktive Teil Bildseitenverhältnis-Anwärter 4:3, 14:9, 16:9 und 2:1 haben kann, umfassend die Schritte;

- Analysieren für jeden Bildseitenverhältnis-Anwärter mit Ausnahme des Bildseitenverhältnisses 4:3, ob in einem vordefinierten oberen Bereich ($B1_i$) und/oder einem vordefinierten unteren Bereich ($B2_i$) der Videobilder ein schwarzer Balken (13, 14) vorhanden ist oder nicht, wobei der vordefinierte obere und untere Bereich für jedes der Bildseitenverhältnisse 14:9, 16:9 und 2:1 vordefiniert wird und der vordefinierte obere und untere Bereich sich nicht horizontal zu dem linken und rechten Rand der Videobilder erstreckt, um Störungen von Logos von Programmanbietern zu vermeiden, und wobei die Analyse durch Vergleich jedes Luminanz-Pixelwertes innerhalb des vordefinierten oberen Anwärterbereichs ($B1_i$) und/oder eines unteren Bereichs ($B2_i$) mit einem Schwarzpegel-Bezugswert (BLACKLEVEL) und Zählen ($B1Count_i$, $B2Count_i$) der entsprechenden Ergebnisse für jeden der Bildseitenverhältnis-Anwärter 14:9, 16:9 und 2:1 ausgeführt wird;

- Analysieren für jeden Bildseitenverhältnis-Anwärter, ob innerhalb eines Mittelbereichs ($L_i$), der sich in der Mitte des Videobildes befindet, eine minimale Zahl ($LCOUNT_i$) von Pixeln, die einen minimalen Helligkeitspegel (LIGHTLEVEL) haben, vorhanden ist oder nicht;

- Analysieren für jeden der Bildseitenverhältnis-Anwärter 14:9, 16:9 und 2:1, ob ein horizontaler Rand (10, 12) zwischen den schwarzen Balken und dem aktiven Teil des Videobildes vorhanden ist oder nicht, wobei diese Analyse bei einer binarisierten (‚0', ‚1') Version der Videobilder ausgeführt wird und für diese Binarisierung jeder Pixelwert mit dem Schwarzpegel-Bezugswert verglichen wird;

- Auswählen (20, 29, FT) einen der Bildseitenverhältnis-Anwärter unter Verwendung der Ergebnisse aus den Analysierungsschritten.

2. Verfahren nach Anspruch 1, bei dem stromaufwärts von den Analysierungsschritten für die Pixelwerte der Videobilder eine horizontale Tiefpassfilteroperation (15) ausgeführt wird.

3. Verfahren nach Anspruch 1 oder 2, das ferner für jeden Bildseitenverhältnis-Anwärter die Bestimmung der Zahl (VLCOUNTi) von Pixelwerten innerhalb des vordefinierten unteren Bereichs ($B2_i$) einschließt, die einen Bezugswert (VLIGHTLEVEL) überschreiten, um das Vorhandensein von Untertiteln in den Videobildern festzustellen.

4. Verfahren nach einem der Ansprüche 1 bis 3, bei dem in dem horizontalen Randanalysierungsschritt eine Gradientenberechnung ausgeführt wird, die jedem aktuellen Pixel innerhalb eines oberen Gradienten-Analysebereichs (23) und eines unteren Gradienten-Analysebereichs (24) der Videobilder eine Zahl zuordnet, z. B. ‚1', ‚0', ‚-1', die anzeigt, ob das Pixel sich auf einer richtigen horizontalen Randlinie (10, 12), auf keiner horizontalen Randlinie oder auf einer speziellen Struktur befindet, die nicht einer richtigen horizontalen Randlinie entspricht, und wobei die Orte der oberen und unteren Gradienten-Analysebereiche für jedes der Bildseitenverhältnisse vordefiniert werden und die Bereiche zwischen den schwarze Balken und dem aktiven Teil der digitalen Videobilder darstellen.

5. Verfahren nach Anspruch 4, bei dem in einem oberen Gradienten-Analysebereich (23) für die Gradientenberechnung die Werte einer Gruppe von benachbarten Pixeln verwendet werden, wobei die Gruppe in der aktuellen Videozeile das aktuelle Pixel und Pixel links und rechts von dem aktuellen Pixel und die Pixel der benachbarten Videozeile, die sich oberhalb dieser Pixel befindet, einschließt.

6. Verfahren nach Anspruch 5, bei dem die Gruppe eine Breite von zwei Pixeln links und rechts von dem aktuellen Pixel hat, und wobei die Gradientenberechnung die Multiplikation der Pixelwerte der Gruppe mit entsprechenden Zahlen der Matrix

$$\left(\tfrac{1}{5}\right)\times\begin{bmatrix} -1 & -1 & -1 & -1 & -1 \\ +1 & +1 & +1 & +1 & +1 \end{bmatrix}$$

und die Aufsummierung aller Multiplikations-Ergebniswerte einschließt.

7. Verfahren nach Anspruch 6, bei dem für die Gradientenberechnung zusätzlich die entsprechende Gruppe von Pixeln, die eine Breite von einem Pixel links und rechts von dem aktuellen Pixel hat, mit entsprechenden Zahlen der Matrizen

$$\begin{bmatrix} -1 & 0 & +1 \\ 0 & 0 & 0 \end{bmatrix} \qquad \begin{bmatrix} +1 & 0 & -1 \\ 0 & 0 & 0 \end{bmatrix}$$

multipliziert wird und für jede Matrix alle Multiplikations-Ergebniswerte aufsummiert und die absoluten Werte für diese zwei Summenwerte bestimmt werden und der maximale absolute Summenwert (Max) ausgewählt wird, und wobei der ausgewählte maximale absolute Summenwert von dem Summenwertausgang gemäß Anspruch 6 subtrahiert wird, und wobei der Ergebniswert als Gradientenwert dem aktuellen Pixel in der binarisierten Version des aktuellen Viedeobildes zugeordnet wird, wobei der Ergebniswert wahlweise gerundet wird.

8. Verfahren nach Anspruch 4, bei dem in einem unteren Gradienten-Analysebereich (24) für die Gradientenberechnung die Werte einer Gruppe von benachbarten Pixeln verwendet werden, wobei die Gruppe in der aktuellen Videozeile das aktuelle Pixel und Pixel rechts und links von dem aktuellen Pixel und die Pixel der benachbarten Videozeile unterhalb dieser Pixel einschließt.

9. Verfahren nach Anspruch 8, bei dem die Gruppe links und rechts von dem aktuellen Pixel eine Breite von zwei Pixeln hat, und bei dem die Gradientenberechnung die Multiplikation der Pixelwerte der Gruppe mit entsprechenden Zahlen der Matrix

$$\left(\frac{1}{5}\right) \times \begin{bmatrix} +1 +1 +1 +1 +1 \\ -1 -1 -1 -1 -1 \end{bmatrix}$$

und die Aufsummierung aller Multiplikations-Ergebniswerte einschließt.

10. Verfahren nach Anspruch 9, bei dem für die Gradientenberechnung zusätzlich die entsprechende Gruppe von Pixeln, die eine Breite von einem Pixel links und rechts von dem aktuellen Pixel hat, mit entsprechenden Zahlen der Matrizen

$$\begin{bmatrix} 0 & 0 & 0 \\ -1 & 0 & +1 \end{bmatrix} \qquad \begin{bmatrix} 0 & 0 & 0 \\ +1 & 0 & -1 \end{bmatrix}$$

multipliziert wird und für jede Matrix alle Multiplikations-Ergebniswerte aufsummiert und die absoluten Werte für diese zwei Summenwerte bestimmt werden und der maximale Summenwert (Max) ausgewählt wird, und wobei der ausgewählte maximale Summenwert von dem Summenwert-Ausgang gemäß Anspruch 9 subtrahiert wird, und wobei der Ergebniswert als Gradientenwert dem aktuellen Pixel in der binarisierten Version des aktuellen Videobildes zugeordnet wird, wobei der Ergebniswert wahlweise gerundet wird.

11. Verfahren nach Anspruch 4 bis 10, bei dem die während des Gradienten-Berechnungsschritts jedem Pixel zugeordneten Zahlen pro Videozeile und die horizontalen Übergänge den Zeilen zugeordnet werden, die die höchsten Summenwerte haben.

12. Verfahren nach Anspruch 11, bei dem:

   - das Bildseitenverhältnis 4:3 bestimmt wird, wenn die Zahl der aktiven Videozeilen zwischen 576 und 527 liegt,
   - das Bildseitenverhältnis 14:9 bestimmt wird, wenn die Zahl der aktiven Videozeilen zwischen 526 und 463 liegt,
   - das Bildseitenverhältnis 16:9 bestimmt wird, wenn die Zahl der aktiven Videozeilen zwischen 462 und 405 liegt,
   - das Bildseitenverhältnis 2:1 bestimmt wird, wenn die Zahl der aktiven Videozeilen kleiner als 405 ist, und das Vorhandensein schwarzer Balken wie auch eines aktiven Bildbereichs in der Mitte der Videobilder festgestellt worden ist.

13. Verfahren nach einem der Ansprüche 1 bis 12, bei dem für jeden Bildseitenverhältnis-Anwärter ein Zähler vorgesehen ist, der jedes Mal fortgeschaltet wird, wenn der entsprechende Bildseitenverhältnis-Anwärter während des Bildseitenverhältnis-Auswahlschritts ausgewählt wird, und der zurückgesetzt wird, wenn ein nicht-entsprechendes Bildseitenverhältnis ausgewählt wird, und wobei eine neue Auswahl des Bildseitenverhältnisses für gültig erklärt wird, wenn der Zähler für das neue Bildseitenverhältnis einen vorbestimmten Bezugswert erreicht hat.

14. Verfahren nach Anspruch 13 bei Abhängigkeit von einem der Ansprüche 3 bis 12, bei dem eine Validierung ausgeführt wird, um festzustellen, ob die neue Auswahl des Bildseitenverhältnisses stabil ist, wobei die Validierung den Untertitel-Analyseschritt einschließt, wenn zuvor kein Untertitel festgestellt worden ist.

15. Vorrichtung zur automatischen Feststellung des Bildseitenverhältnisses des aktiven Teils von digitalen Videobildern, die im 4:3-Format übertragen werden, wobei der aktive Teil Bildseitenverhältnis-Anwärter 4:3, 14:9, 16:9 und 2:1 haben kann, **gekennzeichnet durch**:

   eine Einheit (16) zum Analysieren für jeden Bildseitenverhältnis-Anwärter mit Ausnahme des Bildseitenverhältnisses 4:3, ob in einem vordefinierten oberen Bereich (B1$_i$) und/oder einem vordefinierten unteren Bereich (B2$_i$) der Videobilder ein schwarzer Balken (13, 14) vorhanden ist oder nicht, wobei der vordefinierte obere und untere Bereich für jedes der Bildseitenverhältnisse 14:9, 16:9 und 2:1 vordefiniert wird und der vordefinierte obere und untere Bereich sich nicht horizontal zu dem linken und rechten Rand der Videobilder erstreckt, um Störungen von Logos von Programmanbietern zu vermeiden, und wobei die Analyse durch Vergleich jedes Luminanz-Pixelwertes innerhalb des vordefinierten oberen Anwärterbereichs (B1$_i$) und/oder eines unteren Bereichs (B2$_i$) mit einem Schwarzpegel-Bezugswert (BLACKLEVEL) und Zählen (B1Count$_i$, B2Count$_i$) der entsprechenden Ergebnisse für jeden der Bildseitenverhältnis-Anwärter 14:9, 16:9 und 2:1 ausgeführt wird;
   - eine Einheit (17) zum Analysieren für jeden Bildseitenverhältnis-Anwärter, ob innerhalb eines Mittelbereiches (L$_i$), der sich in der Mitte des Videobildes befindet, eine minimale Zahl (LCOUNT$_i$) von Pixeln, die einen minimalen Helligkeitspegel (LIGHTLEVEL) haben, vorhanden ist oder nicht;

- eine Einheit (19) zum Analysieren für jeden der Bildseitenverhältnis-Anwärter 14:9, 16:9 und 2:1, ob ein horizontaler Rand (10, 12) zwischen den schwarzen Balken und dem aktiven Teil des Videobildes vorhanden ist oder nicht, wobei die Analyse bei einer binarisierten (,0', ,1') Version der Videobilder ausgeführt wird und für diese Binarisierung jeder Pixelwert mit dem Schwarzpegel-Bezugswert verglichen wird;

- eine Einheit (20, 29) zum Auswählen (FT) eines der Bildseitenverhältnis-Anwärter unter Verwendung der Ergebnisse aus der Analysierungseinheit.

16. Verfahren nach einem der Ansprüche 1 bis 14, bei dem der ausgewählte (20, 29, FT) Bildseitenverhältnis-Anwärter in einer Videoaufzeichnungsvorrichtung zur Feststellung des Formats der aufgezeichneten Bilder verwendet wird, um den Aufzeichnungsvorgang angemessen zu steuern.

17. Verfahren nach einem der Ansprüche 1 bis 14, bei dem der ausgewählte (20, 29, FT) Bildseitenverhältnis-Anwärter in einem Fernsehempfänger zur Feststellung des Formats der empfangenen Videobilder verwendet wird, um einen Zoomvorgang zur Anpassung des Bildes an das Anzeigeformat entsprechend zu steuern.

## Revendications

1. Méthode de détection automatique du format d'image de la partie active d'images vidéo numériques transmises au format 4:3, où la partie active peut présenter des formats d'image candidats 4:3, 14:9, 16:9 et 2:1, ladite méthode comprenant les étapes consistant à :

- analyser pour chacun desdits formats d'image candidats, à l'exception dudit format d'image 4:3, si oui ou non une barre noire (13, 14) est présente au sein d'une zone supérieure prédéfinie (B1$_i$) et/ou d'une zone inférieure prédéfinie (B2$_i$) des images vidéo, où lesdites zones supérieure et inférieure prédéfinies sont prédéfinies pour chacun desdits formats d'image 14:9, 16:9 et 2:1 et lesdites zones supérieure et inférieure prédéfinies ne s'étendent pas horizontalement vers les bordures gauche et droite des images vidéo, de manière à éviter des perturbations issues des logos de fournisseurs de programmes, et où l'analyse est réalisée en comparant chaque valeur de pixel de luminance au sein des zones supérieures candidates prédéfinies (B1$_i$) et/ou d'une zone inférieure (B2$_i$) à une valeur de référence de niveau de noir (BLACKLEVEL) et en comptant (B1Count$_i$, B2Count$_i$) les résultats correspondants pour chacun desdits formats d'image candidats 14:9, 16:9 et 2:1 ;

- analyser pour chaque format d'image candidat si oui ou non, au sein d'une zone centrale (L$_i$) située au milieu de l'image vidéo, un nombre minimal (LCOUNT$_i$) de pixels est présent, lesquels présentent un niveau de luminosité minimal (LIGHTLEVEL) ;

- analyser pour chacun desdits formats d'image candidats 14:9, 16:9 et 2:1 si oui ou non une bordure horizontale (10, 12) est présente entre lesdites barres noires et la partie active de l'image vidéo, où cette analyse est réalisée sur une version binarisée ('0', '1') des images vidéo et pour cette binarisation, chaque valeur de pixel est comparée à ladite valeur de référence du niveau de noir ;

- sélectionner (20, 29, FT) un desdits formats d'image candidats, à l'aide des résultats issus desdites étapes d'analyse.

2. Méthode selon la revendication 1, où en amont desdites étapes d'analyse, une opération de filtrage passe-bas horizontale (15) est réalisée pour les valeurs de pixel desdites images vidéo.

3. Méthode selon la revendication 1 ou 2, incluant en outre une détermination, pour chaque format d'image candidat, du nombre (VLCOUNTi) de valeurs de pixel au sein de ladite zone inférieure prédéfinie (B2$_i$) qui dépasse une valeur de référence (VLIGHTLEVEL), afin de détecter la présence de sous-titres dans les images vidéo.

4. Méthode selon une des revendications 1 à 3, où lors de ladite étape d'analyse de la bordure horizontale, un calcul de gradient est réalisé, lequel attribue à chaque pixel actuel au sein d'une zone d'analyse de gradient supérieure (23) et d'une zone d'analyse de gradient inférieure (24) des images vidéo un numéro, par ex. '+1', '0', '-1', lequel numéro indique si ce pixel se situe sur une ligne de bordure horizontale correcte (10, 12), sur une ligne de bordure non horizontale ou sur une structure spéciale qui ne correspond pas à une ligne de bordure horizontale correcte, et où les emplacements desdites zones d'analyse de gradient supérieure et inférieure sont prédéfinis pour chacun desdits formats d'image et représentent les zones entre les barres noires et la partie active desdites images vidéo numériques.

5. Méthode selon la revendication 4, où dans une zone d'analyse de gradient supérieure (23) pour ledit calcul de gradient, les valeurs d'un groupe de pixels avoisinants sont utilisées, ledit groupe incluant dans la ligne vidéo actuelle ledit pixel actuel et des pixels à droite et à gauche dudit pixel actuel et les pixels de ligne vidéo avoisinants situés au-dessus de ces pixels.

**6.** Méthode selon la revendication 5, où ledit groupe présente une largeur de deux pixels à gauche et à droite dudit pixel actuel, et où ledit calcul de gradient inclut une multiplication des valeurs de pixel dudit groupe par des nombres correspondants de la matrice

$$\left(\tfrac{1}{5}\right) \times \begin{bmatrix} -1 & -1 & -1 & -1 & -1 \\ +1 & +1 & +1 & +1 & +1 \end{bmatrix}$$

et une addition de toutes les valeurs du résultat de la multiplication.

**7.** Méthode selon la revendication 6, où pour ledit calcul de gradient, en outre, le groupe correspondant de pixels, présentant une largeur d'un pixel à gauche et à droite dudit pixel actuel, est multiplié par des nombres correspondants des matrices

$$\begin{bmatrix} -1 & 0 & +1 \\ 0 & 0 & 0 \end{bmatrix} \qquad \begin{bmatrix} +1 & 0 & -1 \\ 0 & 0 & 0 \end{bmatrix},$$

et pour chaque matrice, toutes les valeurs du résultat de la multiplication sont ajoutées et les valeurs absolues sont déterminées pour ces deux valeurs de somme et la valeur de somme absolue maximale (Max) est sélectionnée, et où ladite valeur de somme absolue maximale sélectionnée est soustraite de la valeur de somme générée selon la revendication 6, et où la valeur du résultat est attribuée sous forme de valeur de gradient au pixel actuel dans ladite version binarisée de l'image vidéo actuelle, cette valeur de résultat étant éventuellement arrondie.

**8.** Méthode selon la revendication 4, où dans une zone d'analyse de gradient inférieure (24) pour ledit calcul de gradient, les valeurs d'un groupe de pixels avoisinants sont utilisées, ledit groupe incluant dans la ligne vidéo actuelle ledit pixel actuel et des pixels à droite et à gauche dudit pixel actuel et des pixels de ligne vidéo avoisinants situés sous ces pixels.

**9.** Méthode selon la revendication 8, où ledit groupe présente une largeur de deux pixels à gauche et à droite dudit pixel actuel, et où ledit calcul de gradient inclut une multiplication des valeurs de pixel dudit groupe par des nombres correspondants de la matrice

$$\left(\tfrac{1}{5}\right) \times \begin{bmatrix} +1 & +1 & +1 & +1 & +1 \\ -1 & -1 & -1 & -1 & -1 \end{bmatrix}$$

et une addition de toutes les valeurs du résultat de la multiplication.

**10.** Méthode selon la revendication 9, où pour ledit calcul de gradient, en outre, le groupe correspondant de pixels, présentant une largeur d'un pixel à gauche et à droite dudit pixel actuel, est multiplié par des nombre correspondants des matrices

$$\begin{bmatrix} 0 & 0 & 0 \\ -1 & 0 & +1 \end{bmatrix} \qquad \begin{bmatrix} 0 & 0 & 0 \\ +1 & 0 & -1 \end{bmatrix},$$

et pour chaque matrice, toutes les valeurs du résultat de la multiplication sont ajoutées et les valeurs absolues sont déterminées pour ces deux valeurs de somme et la valeur de somme absolue maximale (Max) est sélectionnée, et où ladite valeur de somme absolue maximale sélectionnée est soustraite de la valeur de somme générée selon la revendication 9, et où la valeur du résultat est attribuée sous forme de valeur de gradient au pixel actuel dans ladite version binarisée de l'image vidéo actuelle, cette valeur de résultat étant éventuellement arrondie.

**11.** Méthode selon les revendications 4 à 10, où les nombres attribués à chaque valeur de pixel lors de l'étape de calcul de gradient sont ajoutés par ligne vidéo et les transitions horizontales sont attribuées aux lignes possédant les valeurs de somme les plus élevées.

**12.** Méthode selon la revendication 11, où

- le format d'image 4:3 est déterminé si le nombre de lignes vidéo actives est compris entre 576 et 527,
- le format d'image 14:9 est déterminé si le nombre de lignes vidéo actives est compris entre 526 et 463,
- le format d'image 16:9 est déterminé si le nombre de lignes vidéo actives est compris entre 462 et 405,
- le format d'image 2:1 est déterminé si le nombre de lignes vidéo actives est inférieur à 405,

et la présence de barres noires ainsi que d'une zone d'image active au centre des images vidéo a été détectée.

**13.** Méthode selon une des revendications 1 à 12, où pour chaque format d'image candidat, un compteur est fourni, lequel est incrémenté chaque fois que le format d'image candidat correspondant est sélectionné lors de l'étape de sélection du format d'image et est réinitialisé lorsqu'un format d'image non correspondant est sélectionné, et où un nouveau format d'image sélectionné est déclaré comme étant valide si le compteur pour le nouveau format d'image a atteint une valeur de référence prédéterminée.

**14.** Méthode selon la revendication 13 en cas de dépendance à une des revendications 3 à 12, où une validation est réalisée afin de détecter si oui ou non le nouveau format d'image sélectionné est stable, cette validation incluant l'étape d'analyse des sous-titres lorsqu'aucun sous-titre n'a été détecté auparavant.

**15.** Appareil de détection automatique du format d'image de la partie active d'images vidéo numériques transmises au format 4:3, où la partie active peut présenter des formats d'image candidats 4:3, 14:9, 16:9 et 2:1, ledit appareil étant **caractérisé par** :

- une unité pour (16) adaptée analyser pour chacun desdits formats d'image candidats, à l'exception dudit format d'image 4:3, si oui ou non une barre noire (13, 14) est présente au sein d'une zone supérieure prédéfinie ($B1_i$) et/ou d'une zone inférieure prédéfinie ($B2_i$) des images vidéo, où lesdites zones supérieure et inférieure prédéfinies sont prédéfinies pour chacun desdits formats d'image 14:9, 16:9 et 2:1 et lesdites zones supérieure et inférieure prédéfinies ne s'étendent pas horizontalement vers les bordures gauche et droite des images vidéo, de manière à éviter des perturbations issues des logos de fournisseurs de programmes, et où l'analyse est réalisée en comparant chaque valeur de pixel de luminance au sein des zones supérieures candidates prédéfinies ($B1_i$) et/ou d'une zone inférieure ($B2_i$) à une valeur de référence de niveau de noir (BLACKLEVEL) et en comptant ($B1Count_i$, $B2Count_i$) les résultats correspondants pour chacun desdits formats d'image candidats 14:9, 16:9 et 2:1 ;
- une unité (17) pour analyser pour chaque format d'image candidat si oui ou non, au sein d'une zone centrale ($L_i$) située au milieu de l'image vidéo, un nombre minimal ($LCOUNT_i$) de pixels est présent, lesquels présentent un niveau de luminosité minimal (LIGHTLEVEL) ;

- une unité (19) pour analyser pour chacun desdits formats d'image candidats 14:9, 16:9 et 2:1 si oui ou non une bordure horizontale (10, 12) est présente entre lesdites barres noires et la partie active de l'image vidéo, où cette analyse est réalisée sur une version binarisée ('O', '1') des images vidéo et pour cette binarisation, chaque valeur de pixel est comparée à ladite valeur de référence du niveau de noir ;
- une unité (20, 29) adaptée pour sélectionner (FT) un desdits formats d'image candidats, à l'aide des résultats issus desdites étapes d'analyse.

**16.** Méthode selon une des revendications 1 à 14, où le format d'image candidat sélectionné (20, 29, FT) est utilisé dans un dispositif d'enregistrement vidéo pour la détection du format des images enregistrées afin de commander l'opération d'enregistrement de façon appropriée.

**17.** Méthode selon une des revendications 1 à 14, où le format d'image candidat sélectionné (20, 29, FT) est utilisé dans un récepteur de télévision pour la détection du format des images vidéo reçues afin de commander une opération de zoom pour une adaptation de l'image au format d'affichage en conséquence.

Fig. 1

Fig. 2

**Fig. 3**

- 4:3
- 14:9
- 14:9 ST
- 16:9
- 16:9 ST
- 2:1
- 2:1 ST

**Fig. 4**

PelSTA — PelEND

B1STA$_i$ —>

B1END$_i$ —>

Area B1$_i$

B2STA$_i$ —>

B2END$_i$ —>

Area B2$_i$

**Fig. 5**

<— LSTA$_i$

Area L$_i$

<— LEND$_i$

**Fig. 6**

Fig. 7

Fig. 8

25

26

27

$$\frac{1}{5} \cdot \begin{bmatrix} -1 & -1 & -1 & -1 & -1 \\ +1 & +1 & +1 & +1 & +1 \end{bmatrix}$$

$$\begin{bmatrix} -1 & 0 & +1 \\ 0 & 0 & 0 \end{bmatrix}$$

$$\begin{bmatrix} +1 & 0 & -1 \\ 0 & 0 & 0 \end{bmatrix}$$

| |

| |

**Max**

+    −

**+**

Grad1$_i$

**Fig. 9 a)**

25

26

27

$$\frac{1}{5} \cdot \begin{bmatrix} +1 & +1 & +1 & +1 & +1 \\ -1 & -1 & -1 & -1 & -1 \end{bmatrix}$$

$$\begin{bmatrix} 0 & 0 & 0 \\ -1 & 0 & +1 \end{bmatrix}$$

$$\begin{bmatrix} 0 & 0 & 0 \\ +1 & 0 & -1 \end{bmatrix}$$

| |

| |

**Max**

+    −

**+**

Grad2$_i$

**Fig. 9 b)**

**Fig. 10 a)**

Fig. 10 b)

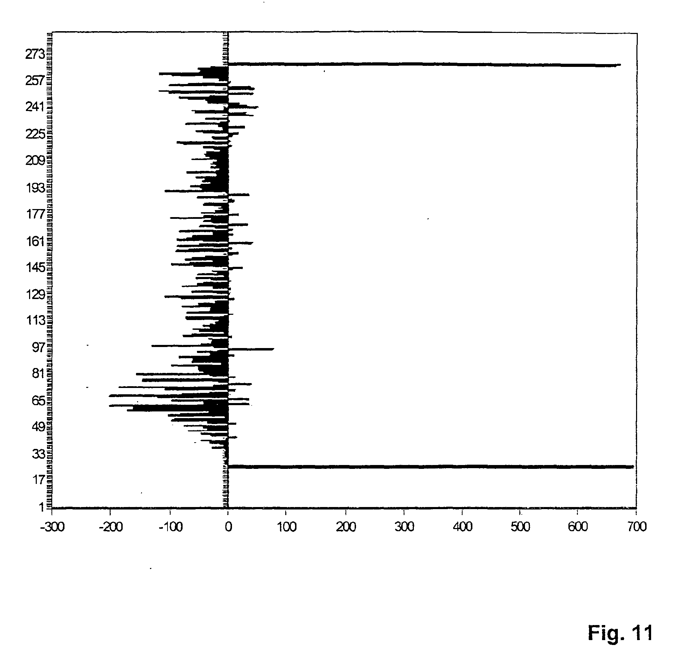

**Fig. 11**

Fig. 12

Test 0
4:3

Test 1
14:9

Test 1st
14:9

Test 2
16:9

Test 2st
16:9

Test 3
2:1

Test 3st
2:1

SL

EL

FT

- 4:3
- 14:9
- 14:9 ST
- 16:9
- 16:9 ST
- 2:1
- 2:1 ST

28

29

Fig. 13

**EP 0 913 994 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0716542 A
- EP 0785676 A
- EP 0675645 A

### Non-patent literature cited in the description

- **N. Nakagaki et al.** Wide aspect TV receiver detection and non-linear control for picture quality. *IEEE Transactions on Consumer Electronics,* vol. 40 (3), 743-751